# EUROPEAN PATENT SPECIFICATION

(11) **EP 2 983 971 B1**
(45) Date of publication and mention of the grant of the patent: **05.06.2019**
(21) Application number: 14714755.7
(22) Date of filing: 03.04.2014
(51) Int. Cl.: B62D 61/06, B60P 1/04

(54) **ELECTRIC DUMPER VEHICLE**
ELEKTRISCHES KIPPFAHRZEUG
MOTOBASCULEUR ÉLECTRIQUE

(30) Priority: 12.04.2013 GB 201306671
(43) Date of publication of application: 17.02.2016
(73) Proprietor: Dublin City University, Dublin D9 (IE)
(72) Inventor: YOUNG, Paul Samuel Fleming, Bray Co. Wicklow (IE); BYRNE, Francis Anthony, Lusk Co. Dublin (IE); MURPHY, Alexander Philip, 6W Dublin (IE); BREEN, Sean, Portlaoise Co. Laois (IE)
(74) Representative: Hanna Moore + Curley
(86) International application number: PCT/EP2014/056749
(87) International publication number: WO 2014/166818

(56) References cited:
- EP-A1- 1 533 214
- US-A1- 2001 013 720
- US-A1- 2006 032 683
- US-A1- 2010 194 174
- US-A1- 2010 275 472
- US-A1- 2012 146 386
- US-B1- 6 887 029

## Description

### Field

The present application relates to dumper vehicles for indoor and outdoor working environments. Such dumper vehicles are disclosed in for example US 2010/194174 A1 and US 2001/013720 A1.

### Background Of The Invention

A dumper vehicle or dumper is a vehicle designed for carrying bulk material, often on building sites. Within the context of the present teaching dumpers are distinguished from dump trucks by configuration: a dumper will be considered as being of the type of vehicle having a load skip in front of the driver, while a dump truck has its cab in front of the load. The load skip or skip may be configured to be elevated above the chassis and dump the load. Dumpers are normally diesel powered. Dumpers with rubber tracks are used in special circumstances for use on rough terrain.

Early dumpers were provided in a 2-wheel drive configuration, being driven on the front axle and steered at the back wheels. A single cylinder diesel engine was started by hand cranking. The steering wheel turned the back wheels, not front. The skip was secured by a catch by the driver's feet. When the catch was released, the skip tipped under the weight of its contents at pivot points below, and after being emptied was raised by hand.

One of the problems faced by designers of dumper vehicles is that of ensuring stability of the vehicle particularly when the vehicle is being steered when driving over uneven, steep or unstable ground. The problem can be more difficult to overcome in small dumper vehicles of the kind used on small building sites where users require a fairly substantial skip to carry material whilst the vehicle itself must remain of small size to be sufficiently manoeuvrable in such locations.

Modern dumpers have payloads of up to 10 tonnes and usually steer by articulating at the middle of the chassis (pivot steering). Such dumpers may have multi-cylinder diesel engines, some turbocharged, and may comprise electric controls and hydraulics for tipping and steering. A Roll-Over Protection frame may be fitted over the seat to protect the driver if the dumper rolls over. Some dumpers have Falling Object Protection (FOPS) as well. Lifting skips are available for discharging above ground level.

Dumper vehicles may be required to be relatively heavy, particularly since they commonly use heavy counterweights to balance the load carried by the tip. Typically, the front wheels of such vehicles are supported on a wheel bearing means. Since loads may be picked up outside the base area of the vehicle, a load moment will arise which might cause the dumper vehicle to tilt about the front axle. The load moment has to be compensated for by a corresponding righting moment. This righting moment is served by the dead weight of the vehicle that can be increased by separate counterweights at the other end of the vehicle. Thus, a defined working load of the dumper vehicle is opposed by a relatively large dead weight which requires to be accelerated and decelerated again during each driving and braking action, thereby increasing power requirements. Also, the dead weight will increase the resistance to vehicular motion as well as the loads imposed on the wheel. In addition such dead weight presupposes a sufficient load-carrying capacity of the floor or surface upon which the vehicle is disposed. Therefore, if lifting heights are larger the ultimate load admissible requires to be reduced as otherwise the stability of the vehicle will be jeopardized, especially when the load is lifted.

In view of the above necessity for counterweights, dumper vehicles cannot easily be transported from one site to another. This is a serious disadvantage in many applications, since dumper vehicles are commonly required for loading and unloading sod, bricks, construction materials and the like at locations where it would be uneconomic to maintain a dumper vehicle present at all times. In a solution to the problem of requiring a heavy counterweight to balance loads carried by dumper vehicles, US6,398,480 describes dynamically adjusting the distance between the wheels to adjust the centre of gravity when carrying a load. Other solutions involve placing limitations on vehicles when carrying a load, examples of which are disclosed in US2007/080025, US 2012/239261 and CA 2638085.

There is currently a large market for 2 ton and larger internal combustion engine dumpers for outdoor construction sites worldwide. This market is adequately supplied by a number of manufacturers.

However there is a significant requirement for 0.5-2.0 tonne electric dumper trucks that can be used in indoor locations such as hospitals, libraries, pharmaceutical plants or any other environment where zero emissions and low noise are important.

US6887029B1 discloses a three-wheeled, electrically powered cart for transporting items typically transported using a hand truck. The cart comprises a body section housing rechargeable batteries and a steerable load section that is hinged to the body section. An electric motor powers the front wheel for propelling the cart. The load section pivots about a generally vertical axis and has a movable load rack that pivots about a horizontal axis. A platform is located between the two rear wheels for supporting a user during operation. In one embodiment, the width of the cart is approximately 24 inches, allowing the cart to pass through a typical doorway.

Currently however there are no 1-tonne dumpers available on the market which are capable of operating in environments where noise and noxious gas emissions are prohibited. Such sites are characterised by the restricted working space requiring high manoeuvrability from the vehicle coupled with the ability to cope with transition to outdoor rough and unstable terrain.

Four main requirements technology requirements have been set for 1 tonne capacity dumper systems. These requirements include the working environment, drive and power-train, and EU regulations and directives on zero emissions and low noise requirements in public sites where such vehicles are to be used. In 1996 the European Commission issued a Green Paper in which it was stated that an estimated 20% of EU citizens were exposed to noise levels that scientists and health experts considered to be unacceptable, at which most people become annoyed, sleep is disturbed and health may be at risk.

EU regulation mainly comes from the Directive 2005/88/EC of the European Parliament and of the council of 14 December 2005 amending Directive 2000/14/EC on the approximation of the laws of the Member States relating to the noise emission in the environment by equipment for use outdoors. While the requirements for the EU seem more lenient, there are stricter time controlled dB values of 52dB and 45dB for overtime and night operations in Ireland and UK for larger-sized dumpers.

According to the European Enterprise and Industry Website, diesel and spark emission engines installed in non-road mobile machinery (NRMM) such as excavators, bulldozers, front loaders, back loaders, compressors contribute greatly to air pollution by emitting carbon oxide (CO), hydrocarbons (HC), nitrogen oxides (NOx) and particulate matters. In line with the EU environmental policy it is the objective to progressively reduce the emissions and to phase out polluting equipment. Emissions from these engines are regulated before they are placed on the market by four directives: the Directive 97/68/EC, amended by the Directive 2002/88/EC, by the Directive 2004/26/EC and by the Directive 2006/105/EC.

Less than one tonne capacity dumper systems currently exist and meet present noise and emission regulations. However, 1 tonne and above systems are mainly outdoor systems of which none have zero emission status or indoor use technologies. Thus, there is a requirement for a 1 tonne capacity vehicle which is operable in indoor and outdoor environments, and which has a drive system configured to comply with zero emission specifications and noise directives.

In another requirement, a small turning radius is required to be able to manoeuvre in tight corners. In work environments such as indoor construction, hospitals malls etc., skid steering is not allowed as the tires leave a lot of rubber on the floor because of friction. Such tire marks are very difficult to get rid of and clean. In addition, tracked and skid steer vehicles need significant power requirements for turning.

For these reasons and others, there is a need for a dumper vehicle that can operate in a confined space where noise and noxious gas emissions are prohibited and which provides stability of movement in both indoor and outdoor environments over a range of terrains, and which is configured to carry loads of between 0.5 and 2 tonnes.

### Summary

Accordingly, a first embodiment of the application provides a dumper vehicle as detailed in claim 1. Advantageous features are provided in the dependent claims.

### Brief Description Of The Drawings

The present application will now be described with reference to the accompanying drawings in which:
Figure 1 is a side view of the dumper vehicle according to an embodiment of the present teaching;
Figure 2 illustrates a front view of the dumper vehicle;
Figure 3 illustrates a rear view of the dumper vehicle;
Figure 4 illustrates an isometric view of a chassis of the dumper vehicle, according to one embodiment of the present teaching;
Figure 5 is a front perspective view of the dumper vehicle according to an embodiment of the present teaching;
Figure 6 is a bottom plan view of the dumper vehicle showing a central space defined between panniers for housing batteries for powering the motors;
Figure 7 is a perspective view of the dumper vehicle in a fully assembled configuration; and
Figure 8 illustrates a hydraulic system for operating a load carrying skip of the dumper vehicle, according to an embodiment of the present teaching; and
Figure 9 illustrates the turning motion for a dumper vehicle according to the present teaching.

### Detailed Description Of The Drawings

Exemplary arrangements of an electric dumper vehicle provided in accordance with the present teaching will be described hereinafter to assist with an understanding of the benefits of the present teaching. Such a vehicle will be understood as being exemplary of the type of vehicle that could be provided and is not intended to limit the present teaching to any one specific arrangement as modifications could be made to that described herein without departing from the scope of the present teaching.

The present teaching provides a three-wheeled zero emission electric dumper vehicle. The dumper vehicle includes a chassis supporting two fixed front wheels and a single steering rear wheel, wherein all three wheels are driven individually by respective electric motors. The chassis also supports a load carrying assembly, or skip, for carrying loads, wherein the vehicle is configured such that a distribution of weight supported by the chassis is such that a centre of gravity of the vehicle is maintained, during normal operating conditions, within a triangle formed by the contact of the wheels on the ground in both loaded and unloaded states of the load carrying assembly. Within the context of the present teaching the term normal operating conditions is defined by the intended environment within which the vehicle will operate. Given the examples above of having to operate both in an indoor and outdoor environment it will be appreciated that in operation the vehicle will be required to deal with graded inclines and rough terrain. With the skip in the lowered position resting on the chassis (the travelling configuration), a vehicle provided in accordance with the present teaching is capable of travelling directly up and down gradients up to 45% gradient (about 25 degrees incline) safely in loaded and unloaded conditions at controlled speeds. It will be appreciated that the control of the speed is effected by having a motor capable of restraining acceleration of the vehicle during passage on terrain of this nature. Typical operating speeds of a vehicle in accordance with the present teaching will be no faster than about 8 km/h. Side slopes may be traversed up to 35% gradient (about 20 degrees incline), and rough terrain may also be traversed safely where the inclination of the vehicle remains within the 45% gradient in the longitudinal direction and the 35% gradient in the transverse direction. With the skip in the raised position it will be appreciated that the centre of gravity of the vehicle is raised and this effective increase in the height of the centre of gravity means that movement of the vehicle must be restricted to small, very slow adjustments of position. Such speed will be analogous of a limp mode of conventional electric vehicles where the speed is reduced to about 10% of the typical operating speeds. The capacity to constrain or restrict speeds or adjustment of position dependent on the orientation of the vehicle can be controlled through use of drive-by-wire control systems.

From the above, it will therefore be appreciated that the term normal operating conditions, in the context of the present teaching, will have different characteristics dependent on whether the skip is in its lowered or raised configuration. In a lowered configuration the vehicle is capable of maintaining the centre of gravity within the triangle formed by the contact of the wheels on the ground in both loaded and unloaded states of the load carrying assembly during periods where the vehicle remains orientated within the 45% gradient in the longitudinal direction and the 35% gradient in the transverse direction and this should be considered the normal operating conditions of the vehicle. It will be appreciated that these conditions are related to the size and capacity of the vehicle and in one preferred arrangement a dumper vehicle provided in accordance within the present teaching is configured to carry loads of between 0.5 and 2 tonnes and configured to be operable at gradients of up to 45% and is sized to fit through openings of 1 metre width.

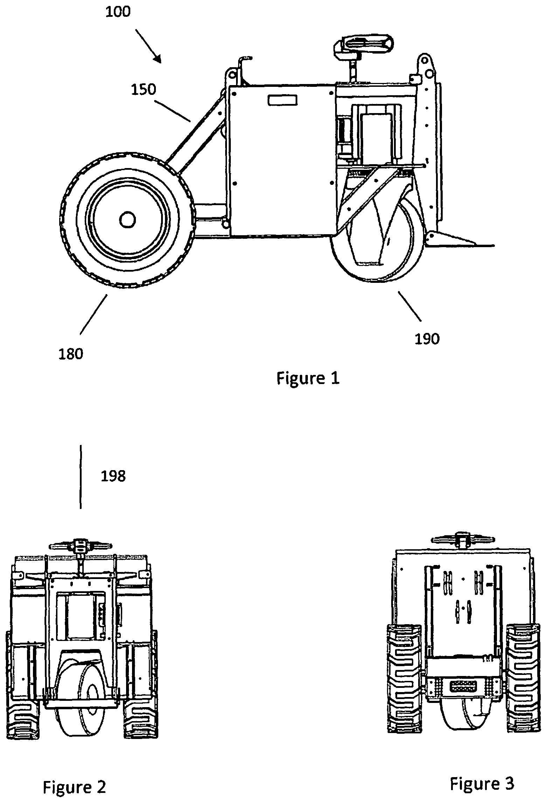

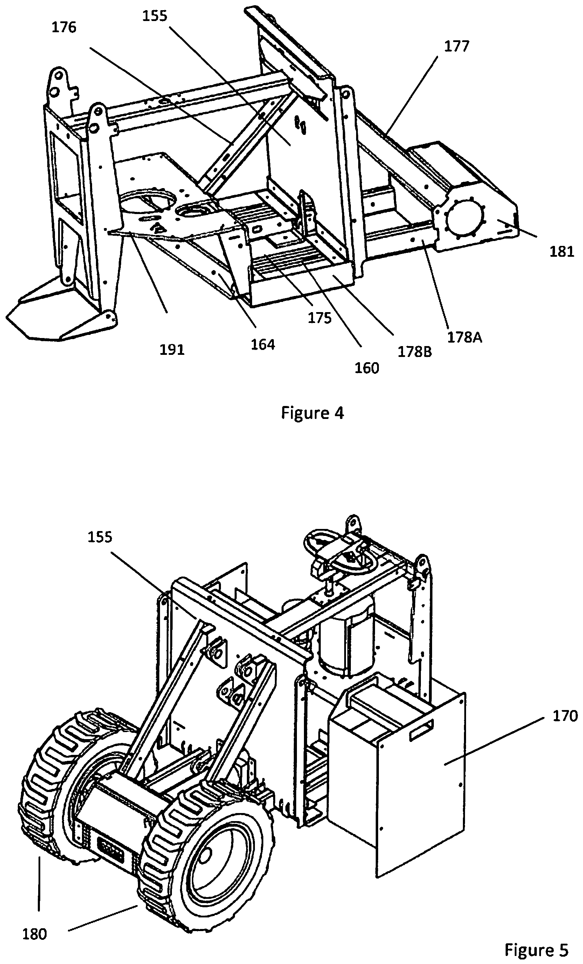

Figure 1 is a side view of the dumper vehicle 100 according to an embodiment of the present teaching. Figures 2 and 3 illustrate front and rear views of the dumper vehicle 100 and Figure 4 illustrates an isometric view of the dumper 100. The dumper vehicle 100 comprises a chassis 150 with two fixed direction wheels 180 at the front and a single rear wheel 190 at the rear of the chassis 150. Each of the wheels 180, 190 is driven by a separate electric motor. Referring to Figure 2, the orientation of the rear wheel 190 may be controlled by a fourth motor driving a gear which rotates the rear wheel axle about an axis 198 substantially perpendicular to a plane defined by the triangular orientation of the front and rear wheels 180, 190. Thus, the rear wheel 190 functions to steer the dumper vehicle 100. This configuration allows the use of a rigid chassis without the need for a hinging pivot commonly found in current diesel powered dumper vehicles. The provision of a three-wheeled configuration, a separate motor for each of the front and rear wheels 180, 190 and the rotation of the rear wheel 190 in the substantially vertical plane enables ease of movement and manoeuvrability of the dumper vehicle 100 in restricted working spaces. In addition, the front and rear wheels 180, 190 can be driven individually or collectively. Each of the front and rear wheels 180, 190 may comprise a pneumatic tire for ensuring grip and flexibility.

It will be appreciated that the use of a three-wheeled configuration allows the dumper vehicle 100 to turn close to its axes of movement. The lack of emissions and low noise of the vehicle due to use of electric motors mean that the dumper vehicle 100 is configured to meet noise and emission regulations. This ensures that the dumper vehicle may be used safely indoors. However as the dumper vehicle 100 is also intended for use in construction/demolition environments it does not require a smooth floor surface. In order for this to be achieved, the configuration of the dumper vehicle 100 in terms of the wheel locations, battery location, payload location and attachment points is designed to ensure stability in rough environments. It will be appreciated that rough conditions within the constraints of the present teaching will be within the constraints of the normal; operating conditions defined above. As mentioned above, each of the front and rear wheels 180, 190 may comprise a pneumatic tire for ensuring grip and flexibility in rough terrain.

The main component of the dumper vehicle 100 is the chassis 150 which is configured to provide sufficient structural torsional and bending rigidity. The chassis 150 is designed to ensure that the completed assembled dumper vehicle 100 has a compact and lightweight structure. Figure 4 shows an example of a chassis 150 that may be used, according to one embodiment of the present teaching.

The chassis 150 is configured to provide a stable platform for the dumper vehicle 100 throughout the range of motion of the lifting mechanisms of the load carrying assembly in loading and unloading positions. Actuators for activating the load carrying assembly will be described later. Referring to Figure 4, the chassis 150 may include a central bulkhead 155 between the front and rear of the chassis 150. The central bulkhead 155 may be in the form of a plate extending in a substantially perpendicular direction to a plane defined by the front and rear wheels 180, 190. The central bulkhead 155 may also extend laterally with respect to a longitudinal axis of the vehicle, as illustrated in Figure 4. The central bulkhead 155 is thus configured to provide both vertical and lateral strength to the chassis 150 and thus to the overall dumper vehicle 100. The chassis 150 may define an area for receiving batteries for powering the motors which drive the front and rear wheels 180, 190. A drive system for operating the load carrying assembly may also be housed in this area. The drive system for operating the load carrying assembly may in one embodiment comprise an electric driven hydraulic powerpack. In this regard, the batteries and the drive system for operating the load carrying assembly may be housed on a platform 160 in the chassis 150. The height of the platform 160 is configured such that when the batteries and drive system are received on the platform 160, the centre of gravity of the dumper vehicle 100 is positioned as low as possible to the ground. To this end, the platform 160 may define a plane disposed below an axis of rotation of the front wheels 180 and/or above a horizontal axis of rotation of the rear wheel 190. The location of the batteries and the distribution of the weight in the dumper vehicle 100 are configured to allow the operation of a high lift skip on the front of the dumper vehicle 100 while ensuring stability. When carrying a full payload, the balance of the dumper vehicle 100 is maintained with the skip in its lowered travelling position by providing the distribution of weight within the vehicle such that the location of the centre of gravity of the dumper vehicle 100 as close to the ground as possible.

Figure 5 is an isometric view of the chassis 150 of the dumper vehicle 100, according to one embodiment of the present teaching. The view in Figure 5 is from a perspective at the front of the dumper vehicle 100. As illustrated, the two front wheels 180 are located forward of the central bulkhead 155. To ensure optimal distribution of weight the present teaching advantageously provides for a mounting of batteries in two panniers 170 which may be presented to the dumper vehicle 100 immediately behind the bulkhead 155 from either side of the vehicle. The panniers 170 may comprise first and second panniers, each of the first and second panniers being configured to receive batteries. Each of the panniers is moveable relative to the chassis 150 between a supported and a non-supported position. In the non-supported position a user is provided with access to a pannier to allow a loading or unloading of the batteries within the pannier and in a supported position the panniers are supported on the platform. Each of the panniers 170 may be moved from opposite sides of the vehicle between their respective supported and non-supported positions. The panniers 170 may be co-operable with a forklift blade or suitable hoist so as to allow a movement of the panniers between the supported and non-supported positions. The panniers 170 may comprise a socket dimensioned to receive the lifting arm of the forklift. It will be appreciated that the weight of batteries necessary to provide sufficient power for an electric zero emission vehicle is significant and by advantageously separating the batteries into first and second panniers which are individually located relative to the chassis it is possible to effectively ensure the distribution of weight to ensure that the centre of gravity is maintained, during normal operating conditions of the vehicle, within the triangle formed by the contact of the three wheels on the ground on which the vehicle is travelling. Exemplary implementations require 8 batteries of 50 kg each having dimensions of 600mm x 250mm x 150 mm but it will be appreciated that these parameters will vary dependent on the performance of the vehicle and dimensions available for storage of same and battery technology.

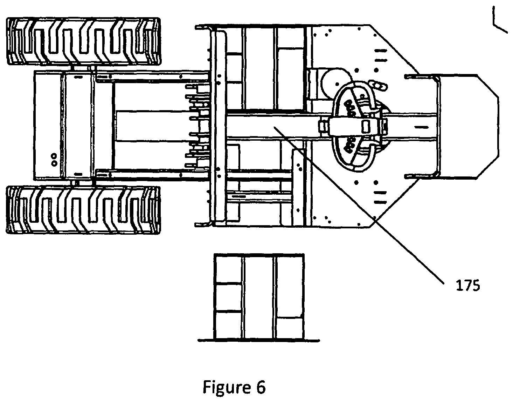

The above-described configuration allows the centre of gravity of the loaded and unloaded vehicle to be maintained within the triangle formed by the contact of the wheels 180, 190 on the ground. The panniers 170 may be configured such that a central space 175 is defined therebetween, as illustrated in the bottom plan view of Figure 6. The drive system for the load carrying assembly may be housed in the central space 175 on the platform 160. By positioning the weight of the drive system and the batteries on the same level and as close to the ground as possible, the centre of gravity of the dumper vehicle is located towards the base of the vehicle, thereby providing stability. The positioning of the drive components, batteries and other ancillary devices therefore stabilises the overall vehicle and obviates the need for any separate counterweight. Thus, the overall weight of the vehicle is kept to a minimum, which is an advantage in terms of portability.

Referring back to Figure 4, an inclined structural member 176 providing support to the rear of the central bulkhead 155 may be accommodated in the central space 175. The inclined structural member 176 may extend from the rear of the central bulkhead 155 to a rear wheel mounting plate 191. The rear wheel mounting plate 191 may also house a motor for driving the rear wheel 190 and the fourth motor for rotating the rear wheel axle about an axis substantially perpendicular to a plane defined by the triangular orientation of the front and rear wheels 180, 190. Additionally the central bulkhead 155 may be supported to the front by two inclined structural members 177 extending to a front axle box 181. The front axle box 181 may house the front axle and motors for driving the front wheels 180. Two outer horizontal members 178A may run longitudinally from the front axle box 181 to the central bulkhead 155 at the lowest possible level to support the weight of the batteries from beneath. Two inner horizontal members 178B may extend in parallel to the outer horizontal members 178A under the batteries before rising to the rear wheel mounting plate 191. The inner horizontal members 178B and outer horizontal members 178A may be connected to the central bulkhead 155. The inner horizontal members 178B define the platform 160. The platform 160 may be bounded to the front by the central bulkhead 155 and to the rear by a plate 164 extending from the inner horizontal members 178B to the rear wheel mounting plate 191.

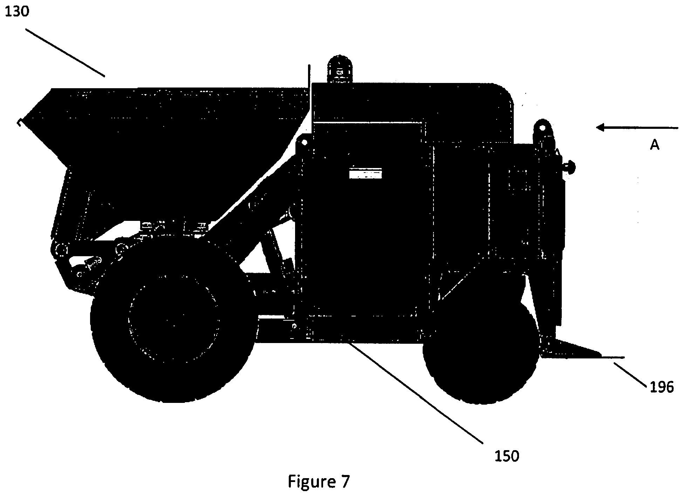

Figure 7 is a perspective view of the dumper vehicle in a fully assembled configuration. The dumper vehicle 100 may comprise a load carrying skip 130 mounted on the chassis 150. The load carrying skip 130 may be designed to carry loads of between 0.5 and 2 tonnes. The load carrying skip 130 is movable relative to the chassis 150 to enable carried loads to be dumped therefrom. In the illustrated embodiment, the load carrying skip 130 is pivotable about a horizontal tipping axis generally in the direction of an arrow A to permit the dumping of loads therefrom. As is clearly illustrated in Figure 7, the load carrying skip 130 may be mounted on the chassis 150 in front of a platform 196 on which an operator stands when operating the dumper 100. In other embodiments, the platform 196 may be retractable so that the platform 196 can be folded against a rear of the dumper vehicle 100 when not in use. In embodiments of the present teaching, the load carrying skip 130 may also be rotatable about a vertical axis to permit the sideways dumping of loads from the load carrying skip 130. In other embodiments the load carrying skip 130 may be lower than the height of the operator controls. Other arrangements may have a longer skip in the longitudinal direction of the vehicle.

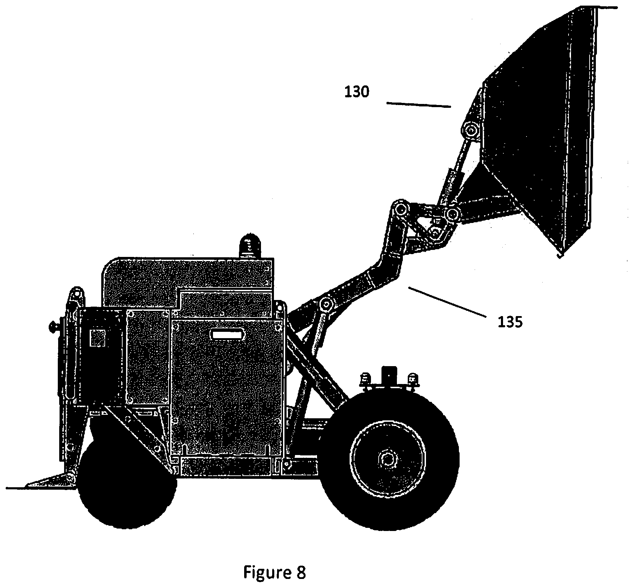

The load carrying skip 130 may be actuated by a hydraulic system powered by an electric motor driven hydraulic power pack. Referring to Figure 8, the hydraulic system may comprise hydraulic cylinders, rams and a lifting arm 135 for tipping the skip 130 in a manner that would be understood by the skilled person. A hydraulic liquid for actuating the hydraulic components 135 may be provided by a transmission operated oil pump which draws oil from a reservoir and may be controlled by the operator. Pressurised liquid from the pump may pass through a flexible coupling to a main distributing valve which can be set to supply the pressurised liquid through the flexible coupling to the hydraulic components 135 for tipping the skip 130.

Movement of the mechanisms required for the dumper vehicle 100 to empty its load from the skip 130 is enabled through the use of an electric motor driven hydraulic power pack supplying power to the hydraulic rams. The hydraulic power pack may comprise a motor mounted between the inner horizontal members 161. The motor may occupy some of the central space 175 between the panniers 170 to ensure the centre of gravity is as low as possible. The oil reservoir for the hydraulics 135 may be positioned in front of the central bulkhead 155 between the outer horizontal members 178. The attachment points for the mechanisms of the chassis 150 described above are all affixed to the central bulkhead 155. Thus, the central bulkhead 155 provides both vertical and lateral stability to the chassis 150.

The chassis 150 may be designed and analysed using CAD and CAE software for torsional rigidity and stiffness, and vibration and modal analysis for when the vehicle is moving over rougher terrain. It will be appreciated that while several embodiments of the chassis design have been described above, the present teaching should not be construed as being limited to these particular arrangements. Any chassis design which results in a chassis which maintains contact of all of the wheels on the ground in both loaded and unloaded states of the load carrying assembly is possible within the limits of the present teaching.

The centre of gravity of the vehicle is maintained within a triangle formed by the contact of the wheels on the ground in both loaded and unloaded states of the load carrying assembly.

The dumper vehicle 100 according to the present teaching may be configured to be operated in a number of ways. In one embodiment, the dumper vehicle may be controlled by drive-by-wire technology. For example, an operator may walk beside or behind the dumper and operate it by remote control. The dumper vehicle may be towed by another vehicle. In another arrangement, the dumper may comprise a retractable platform to the rear of the vehicle to allow an operator to hop on/off the vehicle. The dumper vehicle may be operated by an operator standing on the platform using joy stick power assisted steering.

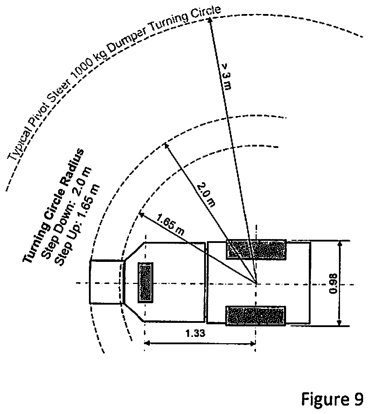

The dumper vehicle 100 according to the present teaching is configured for ease of manoeuvrability. As described above, the dumper vehicle 100 according to the present teaching has a rear steering wheel 190 and two front wheels 180. It will be appreciated by those of skill in the art that three wheel vehicles typically always turn about a centre on the line defined by the rotational axis of the front wheels. Figure 9 illustrates the turning motion for a dumper vehicle according to the present teaching. At small steering angles this point is distant from the vehicle to the inside of the turn and the inner wheel must rotate slower than the outer wheel. However, at the critical angle it lies directly at the location of the inner front wheel. At this steering angle, the inner wheel should not rotate on its axle. For larger steering angles, the centre of rotation will move between the inner wheel and the centre line of the vehicle, and the inner wheel should rotate in the reverse direction. This behaviour is well known and the standard control algorithms for the controllers used in drive-by-wire vehicles allow the setting of the parameters required to control this behaviour. This characteristic gives the vehicle high manoeuvrability in confined indoor spaces. The rate of turn is a forward velocity of the vehicle divided by the distance to the centre of the turn, and results in centripetal acceleration of the vehicle towards the centre A corresponding overturning moment results, which may be actively reduced by slowing the vehicle as the turn rate increases and this is also a feature of commercially available drive-by-wire controllers. The severity of this problem is reduced in a vehicle provided in accordance with the present teaching as the centre of gravity of the vehicle is lowered. The narrow width of the triangle formed by the wheels compared with the load requirements require optimised location of the structural elements to allow heavy components be installed as low as possible within the design.

By positioning the weight of the drive system and the batteries on the same level and as close to the ground as possible, the centre of gravity of the dumper vehicle is located towards the base of the vehicle, thereby providing stability. The positioning of the drive components, batteries and other ancillary devices therefore stabilises the overall vehicle and obviates the need for any separate counterweight. Thus, the overall weight of the vehicle is kept to a minimum, which is an advantage in terms of portability. The load carrying assembly may be driven by an electric driven hydraulic powerpack. The dumper vehicle has multi-terrain capability for indoor and outdoor use. The chassis may be designed in consideration of weight, portability size, weight and volume capacity, drive, manoeuvring operation, and location of centre of gravities of the vehicle. In one configuration of a dumper vehicle provided in accordance with the present teaching the vehicle is configured to carry loads of between 0.5 and 2 tonnes and configured to be operable at gradients of up to 45% and is sized to fit through openings of 1 metre width.

The words comprises/comprising when used in this specification are to specify the presence of stated features, integers, steps or components but does not preclude the presence or addition of one or more other features, integers, steps, components or groups thereof.

## Claims

1. A three wheel zero emission dumper vehicle (100), the vehicle comprising a chassis (150), the chassis supporting:
two fixed front wheels (180);
a single steering rear wheel (190); and
a load carrying assembly,
**characterised in that** the vehicle is configured such that a distribution of weight supported by the chassis is such that a centre of gravity of the vehicle is maintained within a triangle formed by the contact of the wheels on the ground in both loaded and unloaded states of the load carrying assembly;
wherein the chassis defines a platform (160) configured to house batteries for powering the vehicle and the vehicle further comprises first and second panniers (170), each of the first and second panniers being configured to receive batteries, each of the panniers being moveable relative to the chassis between a supported and a non-supported position and wherein in a non-supported position a user is provided with access to a pannier to allow a loading or unloading of the batteries within the pannier and in a supported position the panniers are supported on the platform;
wherein the panniers (170) are co-operable with a lifting arm of a forklift or hoist so as to allow a movement of the panniers between the supported and non-supported positions, and the panniers comprise a socket dimensioned to receive the lifting arm.

2. The vehicle of claim 1, comprising first, second and third electric motors supported by the chassis and wherein each of the three wheels is driven independently by a separate one of the first, second and third electric motors, the motors being arranged within the vehicle to maintain the centre of gravity within the triangle formed by the contact of the wheels on the ground in both loaded and unloaded states of the load carrying assembly.

3. The vehicle of claim 1 wherein the each of panniers are moveable from opposite sides of the vehicle between their respective supported and non-supported positions.

4. The vehicle of claim 3, wherein, in a supported position, the panniers are configured to define a central space (175) therebetween.

5. The vehicle of any preceding claim, wherein the platform defines a plane disposed below an axis of rotation of the front wheels and/or above a horizontal axis of rotation of the rear wheel.

6. The vehicle of any preceding claim, wherein the load carrying assembly comprises a drive system for driving the load carrying assembly, and wherein the drive system is located in the central space on the platform.

7. The vehicle of any preceding claim, wherein the load carrying assembly comprises a hydraulic raised tipping system, and wherein the hydraulic raised tipping system comprises a skip (130) configured to carry a load.

8. The vehicle of claim 7, wherein the skip is configured to be elevated above the chassis and dump a load.

9. The vehicle of any preceding claim, wherein the chassis comprises a central lateral bulkhead (155) for providing both vertical and lateral strength to the chassis.

10. The vehicle of claim 9, wherein the central bulkhead is in the form of a plate extending in a substantially perpendicular direction to a plane defined by the front and rear wheels, and wherein the central bulkhead extends in a lateral direction with respect to a longitudinal axis of the vehicle.

11. The vehicle of any of claims 9 to 10 when dependent on claim 4, wherein the chassis comprises an inclined structural member (177) provided in the central space which provides support to the rear of the central lateral bulkhead, and
wherein the central bulkhead is supported to the front by two inclined structural members extending to a front axle box (181), and wherein the front axle box is configured to house electric motors for driving the front wheels.

12. The vehicle of any preceding claim, further comprising a fourth electric motor for driving a gear which rotates a rear wheel axle about an axis substantially perpendicular to a plane defined by the triangular orientation of the front and rear wheels, wherein the orientation of the rear wheel is controlled by the fourth motor.

13. The vehicle of any preceding claim, being configured to have a load capacity between 0.5 and 2 tonnes.

14. The vehicle of any preceding claim, being dimensioned so as to allow a passing of the vehicle through a one metre opening.

15. The vehicle of any preceding claim, being configured to be operable at gradients of up to a 45% gradient while maintaining the centre of gravity within the triangle formed by contact of the three wheels on the ground.

## Patentansprüche

1. Dreirädriges emissionsfreies Kipper-Fahrzeug (100), wobei das Fahrzeug ein Fahrgestell (150) umfasst, wobei das Fahrgestell trägt:
zwei feste Vorderräder (180);
ein einzelnes Lenkhinterrad (190); und
eine Lastaufnahmeanordnung,
**dadurch gekennzeichnet, dass** das Fahrzeug so ausgelegt ist, dass eine Verteilung des von dem Fahrgestell getragenen Gewichts derart ist, dass ein Schwerpunkt des Fahrzeugs sowohl im beladenen als auch im unbeladenen Zustand der Lastaufnahmeanordnung innerhalb eines Dreiecks gehalten wird, das durch den Kontakt der Räder mit dem Boden gebildet wird;
wobei das Fahrgestell eine Plattform (160) definiert, die dazu ausgelegt ist, Batterien zum Versorgen des Fahrzeugs mit Energie aufzunehmen, und das Fahrzeug ferner einen ersten und einen zweiten Tragekorb (170) umfasst, wobei jeder des ersten und des zweiten Tragekorbs dazu ausgelegt ist, Batterien aufzunehmen, wobei jeder der Tragekörbe relativ zu dem Fahrgestell zwischen einer getragenen und einer nicht getragenen Position beweglich ist, und wobei in einer nicht getragenen Position ein Benutzer Zugang zu einem Tragekorb enthält, um ein Einsetzen oder Entnehmen der Batterien innerhalb des Tragekorbs zu ermöglichen, und in einer getragenen Position die Tragekörbe auf der Plattform getragen werden;
wobei die Tragekörbe (170) mit einem Hubarm eines Gabelstaplers oder Hebezeugs zusammenwirken können, um eine Bewegung der Tragekörbe zwischen der getragenen und der nicht getragenen Position zu ermöglichen, und die Tragekörbe eine Buchse umfassen, die für die Aufnahme des Hubarms bemessen ist.

2. Fahrzeug nach Anspruch 1, umfassend einen ersten, zweiten und dritten Elektromotor, die von dem Fahrgestell getragen werden, und wobei jedes der drei Räder unabhängig von einem separaten des ersten, zweiten und dritten Elektromotors angetrieben wird, wobei die Motoren innerhalb des Fahrzeugs angeordnet sind, um den Schwerpunkt sowohl im beladenen als auch im unbeladenen Zustand der Lastaufnahmeanordnung innerhalb des Dreiecks zu halten, das durch den Kontakt der Räder mit dem Boden gebildet wird.

3. Fahrzeug nach Anspruch 1, wobei jeder der Tragekörbe von gegenüberliegenden Seiten des Fahrzeugs zwischen seiner jeweiligen getragenen und nicht getragenen Position beweglich ist.

4. Fahrzeug nach Anspruch 3, wobei die Tragekörbe in einer getragenen Position dazu ausgelegt sind, einen mittleren Raum (175) dazwischen zu definieren.

5. Fahrzeug nach einem der vorhergehenden Ansprüche, wobei die Plattform eine Ebene definiert, die unterhalb einer Drehachse der Vorderräder und/oder oberhalb einer horizontalen Drehachse des Hinterrades angeordnet ist.

6. Fahrzeug nach einem der vorhergehenden Ansprüche, wobei die Lastaufnahmeanordnung ein Antriebssystem zum Antreiben der Lastaufnahmeanordnung umfasst und wobei sich das Antriebssystem in dem mittleren Raum auf der Plattform befindet.

7. Fahrzeug nach einem der vorhergehenden Ansprüche, wobei die Lastaufnahmeanordnung ein hydraulisch gehobenes Kippsystem umfasst und wobei das hydraulisch gehobene Kippsystem eine Absetzmulde (130) umfasst, die zum Tragen einer Last ausgelegt ist.

8. Fahrzeug nach Anspruch 7, wobei die Absetzmulde dazu ausgelegt ist, über das Fahrgestell gehoben zu werden und eine Last abzuladen.

9. Fahrzeug nach einem der vorhergehenden Ansprüche, wobei das Fahrgestell eine mittlere seitliche Schottwand (155) umfasst, um dem Fahrgestell sowohl vertikale als auch laterale Stärke zu verleihen.

10. Fahrzeug nach Anspruch 9, wobei die mittlere Schottwand in Form einer Platte ausgebildet ist, die sich in einer im Wesentlichen rechtwinkligen Richtung zu einer durch die Vorderräder und das Hinterrad definierten Ebene erstreckt und wobei sich die mittlere Schottwand in Bezug auf eine Längsachse des Fahrzeugs in eine Querrichtung erstreckt.

11. Fahrzeug nach einem der Ansprüche 9 bis 10, bei Abhängigkeit von Anspruch 4, wobei das Fahrgestell ein geneigtes Strukturelement (177) umfasst, das in dem mittleren Raum vorgesehen ist und das die Rückseite der mittleren seitlichen Schottwand trägt, und
wobei die mittlere Schottwand nach vorne von zwei geneigten Strukturelementen getragen wird, die sich zu einem Vorderachslager (181) erstrecken, und wobei das Vorderachslager dazu ausgelegt ist, Elektromotoren zum Antreiben der Vorderräder aufzunehmen.

12. Fahrzeug nach einem der vorhergehenden Ansprüche, ferner umfassend einen vierten Elektromotor zum Antreiben eines Getriebes, das eine Hinterradachse um eine Achse dreht, die im Wesentlichen rechtwinklig zu einer Ebene angeordnet ist, die durch die Dreiecksausrichtung der Vorderräder und des Hinterrads definiert ist, wobei die Ausrichtung des Hinterrades von dem vierten Motor gesteuert wird.

13. Fahrzeug nach einem der vorhergehenden Ansprüche, das dazu ausgelegt ist, eine Tragfähigkeit zwischen 0,5 und 2 Tonnen zu haben.

14. Fahrzeug nach einem der vorhergehenden Ansprüche, das so bemessen ist, dass es ein Passieren des Fahrzeugs durch eine ein Meter breite Öffnung ermöglicht.

15. Fahrzeug nach einem der vorhergehenden Ansprüche, das dazu ausgelegt ist, bei Steigungen bis zu einem Gefälle von 45 % betreibbar zu sein, während der Schwerpunkt innerhalb des Dreiecks, das durch den Kontakt der drei Räder mit dem Boden gebildet wird, gehalten wird.

## Revendications

1. Véhicule à benne basculante à trois roues à zéro émission (100), le véhicule comprenant un châssis (150), le châssis supportant :
deux roues avant fixes (180) ;
une unique roue arrière directrice (190) ; et
un ensemble de support de charge,
**caractérisé par le fait que** le véhicule est configuré de telle sorte qu'une répartition de poids supporté par le châssis est telle qu'un centre de gravité du véhicule est maintenu à l'intérieur d'un triangle formé par le contact des roues sur le sol à la fois dans des états chargé et déchargé de l'ensemble de support de charge ;
le châssis définissant une plate-forme (160) configurée pour recevoir des batteries pour alimenter le véhicule et le véhicule comprenant en outre des premier et second paniers (170), chacun des premier et second paniers étant configuré pour recevoir des batteries, chacun des paniers étant mobile par rapport au châssis entre une position supportée et une position non supportée et, dans une position non supportée, un utilisateur se voyant offrir un accès à un panier pour permettre le chargement ou déchargement des batteries dans le panier et, dans une position supportée, les paniers étant supportés sur la plate-forme ;
les paniers (170) étant apte à fonctionner de manière coordonnée avec un bras de levage d'un chariot-élévateur ou palan de façon à permettre un mouvement des paniers entre les positions supportée et non supportée, et les paniers comprenant une cavité dimensionnée pour recevoir le bras de levage.

2. Véhicule selon la revendication 1, comprenant des premier, deuxième et troisième moteurs électriques supportés par le châssis et chacune des trois roues étant entraînées indépendamment par un moteur distinct parmi les premier, deuxième et troisième moteurs électriques, les moteurs étant agencés à l'intérieur du véhicule pour maintenir le centre de gravité à l'intérieur du triangle formé par le contact des roues sur le sol dans les états chargé et déchargé de l'ensemble de support de charge.

3. Véhicule selon la revendication 1, dans lequel les paniers sont mobiles à partir des côtés opposés du véhicule entre leurs positions supportée et non supportée respectives.

4. Véhicule selon la revendication 3, dans lequel, dans une position supportée, les paniers sont configurés pour définir un espace central (175) entre eux.

5. Véhicule selon l'une quelconque des revendications précédentes, dans lequel la plate-forme définit un plan disposé au-dessous d'un axe de rotation des roues avant et/ou au-dessus d'un axe de rotation horizontal de la roue arrière.

6. Véhicule selon l'une quelconque des revendications précédentes, dans lequel l'ensemble de support de charge comprend un système d'entraînement pour entraîner l'ensemble de support de charge, et le système d'entraînement est situé dans l'espace central sur la plate-forme.

7. Véhicule selon l'une quelconque des revendications précédentes, dans lequel l'ensemble de support de charge comprend un système de basculement hydraulique, et le système de basculement hydraulique comprend une benne (130) configurée pour porter une charge.

8. Véhicule selon la revendication 7, dans lequel la benne est configurée pour être élevée au-dessus du châssis et déverser une charge.

9. Véhicule selon l'une quelconque des revendications précédentes, dans lequel le châssis comprend une cloison latérale centrale (155) pour fournir à la fois une résistance verticale et latérale au châssis.

10. Véhicule selon la revendication 9, dans lequel la cloison centrale se présente sous la forme d'une plaque s'étendant dans une direction sensiblement perpendiculaire à un plan défini par les roues avant et arrière, et la cloison centrale s'étend dans une direction latérale par rapport à un axe longitudinal du véhicule.

11. Véhicule selon l'une quelconque des revendications 9 et 10, lorsque prises en dépendance de la revendication 4, dans lequel le châssis comprend un élément structurel incliné (177) prévu dans l'espace central, lequel fournit un support à l'arrière de la cloison latérale centrale, et
la cloison centrale est supportée à l'avant par deux éléments structurels inclinés s'étendant vers une boîte d'essieu avant (181), et la boîte d'essieu avant étant configurée pour recevoir des moteurs électriques pour entraîner les roues avant.

12. Véhicule selon l'une quelconque des revendications précédentes, comprenant en outre un quatrième moteur électrique pour entraîner un engrenage qui fait tourner un essieu de roue arrière autour d'un axe sensiblement perpendiculaire à un plan défini par l'orientation triangulaire des roues avant et arrière, l'orientation de la roue arrière étant commandée par le quatrième moteur.

13. Véhicule selon l'une quelconque des revendications précédentes, configuré pour avoir une capacité de charge entre 0,5 et 2 tonnes.

14. Véhicule selon l'une quelconque des revendications précédentes, dimensionné pour permettre le passage du véhicule à travers une ouverture d'un mètre.

15. Véhicule selon l'une quelconque des revendications précédentes, configuré pour être apte à fonctionner à des gradients allant jusqu'à un gradient de 45 % tout en maintenant le centre de gravité à l'intérieur du triangle formé par contact des trois roues sur le sol.
